# EUROPEAN PATENT APPLICATION

(11) **EP 2 559 894 A1**
(43) Date of publication of application: **20.02.2013**
(21) Application number: 11177978.1
(22) Date of filing: 18.08.2011
(51) Int. Cl.: F03D 7/04

(54) **Method to adjust the pitch angle of blades of a wind turbine blade**

(71) Applicant: Siemens Aktiengesellschaft, 80333 München (DE)
(72) Inventor: Christiansen, Per Moelhave, 7430 Ikast (DK); Esbensen, Thomas, 7400 Herning (DK); Laurberg, Hans, 8000 Århus C (DK); Rieper, Johnny, 8700 Horsens (DK)

(57) **Abstract**

The invention relates to a method to adjust the pitch angle of blades of a wind turbine, which is especially used if the aerodynamic performance of the wind turbine blades is influenced by weather conditions.

According to the method invented a change of the aerodynamic performance of the blades is detected, while the blades show a first pitch angle at this point of time. An output power is measured at the wind turbine. The measured output power is allocated to the first pitch angle. The pitch angle is varied with an adaptive step-size. The value of the output power, which is allocated to each varied pitch angle, is measured. The pitch angle variation is continued until an output power maximum is obtained, while the adaptive step-size is chosen in dependency to the history of the measured output power values.

## Description

The invention relates to a method to adjust the pitch angle of blades of a wind turbine, which is especially used if the aerodynamic performance of the wind turbine blades is influenced by weather conditions.

A wind turbine produces electrical power in dependency of the rotational speed and in dependency of the aerodynamic profile of its turning blades.

The rotational speed of the blades is influenced by the pitch angle. The pitch angle is the angle between the chord-line of the blade and the plane of rotation of the rotor.

A specific parameter for the electrical power production is the so called "tip-speed-ratio", which is the ratio of the rotor-shaft-speed to the effective wind-speed.

The pitch angle and the tip-speed-ratio are monitored, controlled and adjusted if necessary to optimize the power production of the wind turbine.

A controller is used for this purpose, which tries to apply and to maintain an optimum pitch angle. The controller sets a predetermined pitch angle and a so called "generator reference power" or "converter reference power" for this purpose. The converter changes these parameters to obtain a beneficial balanced aerodynamic torque of the rotor.

The pitch angle is typically kept to a fixed value within a predefined range. Within this range the generator reference power is set according to a function, while the function is dependent on the speed of the rotating blades and/or dependent on the measured wind speed.

If an obtained generator output power is below a rated output power value of the wind turbine and if the speed of the rotating blades is within a certain range the pitch angle is varied to increase the output power.

The variation of the pitch angle is done in dependency to a power-function, to a torque-function and/or in dependency of the wind speed, while the generator reference power is adjusted in a way that a desired rotational speed of the blades is maintained.

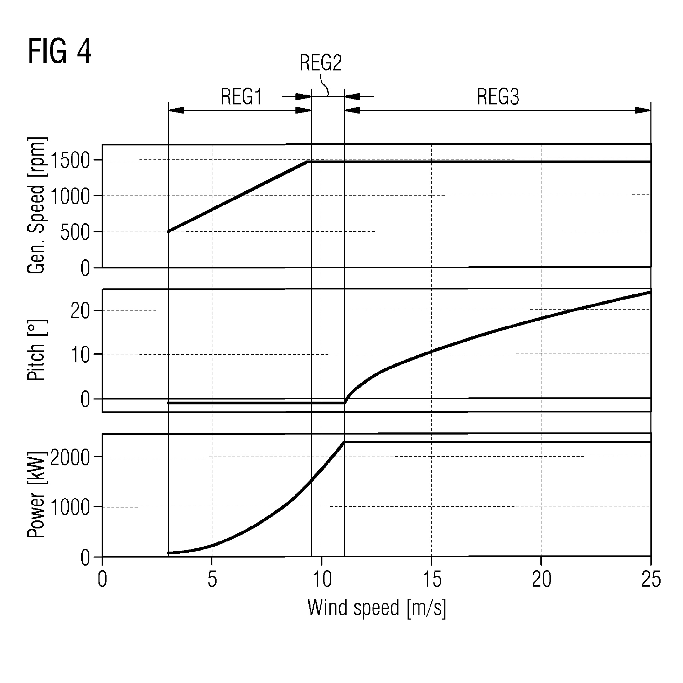

FIG 4 illustrates different measured parameters of a virtual but realistic 2.3 MW wind turbine.

Control regions REG1 to REG3 are separated and marked by vertical dashed lines.

The first chart above shows the generator speed, named Gen.Speed, which is measured in rotations per minute, named [rpm] .

The second chart in the middle shows the pitch angle, named Pitch, of the rotating blades, which is measured in degree, named [°].

The third chart below shows the output power, named Power, of the wind turbine, which is measured in kilowatts, named [KW].

The horizontal axis of all three charts indicates the wind speed, which is measured in meter/second, named [m/s] .

In a first region REG1 the wind speed is between 3 m/s and 9.5 m/s. The rpm-value of the generator speed increases while the pitch angle is kept constant to a value of 0° for example. The output-power of the generator increases from 0 kW towards 1500 kW.

In a second region REG2 the wind speed is between 9.5 m/s and approximately 10.5 m/s. The speed of the wind-turbine-generator is constant with a value of 1500 rpm. The pitch angle is kept constant to a value of 0° for example. The output-power of the generator still increases to a value of 2500 kW.

In a third region REG3 the wind speed is above 10.5 m/s, thus the pitch angle needs to be adjusted. The speed of the wind-turbine-generator is kept by the adjusted pitch angle to the constant value of 1500 rpm. Thus the output-power of the generator is even kept to the constant value of 2500 kW.

A largest possible amount of wind-energy can be obtained by an adjusted pitch angle. For this purpose the pitch angle-reference, the output power-reference and/or the torque-reference are adjusted or adapted to the current wind speed conditions.

This strategy is normally based on a known aerodynamic performance (i.e. the profile and the properties) of the blades of the wind turbine.

But the aerodynamic performance changes in dependency to specific weather conditions, like temperature, humidity, etc.

The aerodynamic performance changes significant if ice starts to cover or already covers at least a part of the blades. The ice changes the aerodynamic profile and properties of the blades in an unpredictable manner.

Additionally the weight and shape of the ice may force the blades into a stall-situation, which leads to a significant reduction of the generated output power of the wind turbine.

Due to the icing, which even may vary over time, and due to the changed aerodynamic performance of the blades there is no optimum pitch angle setting known. Thus the pitch angle-settings together with the pitch-strategy is kept without changes even if ice is detected at the blades.

It is the aim of the invention to provide an improved method to adjust the pitch angle of wind turbine blades if the aerodynamic profile and properties of the blades change in view to weather conditions, preferably if ice starts to cover or already covers at least a part of the blades.

According to the method invented a change of the aerodynamic performance of the blades is detected, while the blades show a first pitch angle at this point of time. An output power is measured at the wind turbine. The measured output power is allocated to the first pitch angle. The pitch angle is varied with an adaptive step-size. The value of the output power, which is allocated to each varied pitch angle, is measured. The pitch angle variation is continued until an output power maximum is obtained, while the adaptive step-size is chosen in dependency to the history of the measured output power values.

In a preferred configuration the method invented comprises a number of steps.

In a first step the pitch angle of the blades is set to a predetermined first pitch angle if ice is detected at the blades.

In a second step the output-power of the wind turbine is measured and is saved as first output-power.

In a third step the pitch angle of the blades is changed to a second pitch angle.

In a fourth step the output-power of the wind turbine is measured and is saved as second output-power.

In a fifth step the first output-power is compared with the second output-power.

In a sixth step the second pitch angle of the blades is varied again to result in an adjusted pitch angle.

If the second output-power exceeds the first output-power the adjusted pitch angle is varied in its value in accordance with the history of the pitch angle-values or in accordance with the rise or fall of the value of the second pitch angle compared with the value of the first pitch angle.

The variation-direction of the pitch angles, which is indicated by the value of the first pitch angle and by the value of the second pitch angle, is maintained. If the second pitch angle exceeds the first pitch angle then the adjusted pitch angle will exceed the second pitch angle. Accordingly if the first pitch angle exceeds the second pitch angle then the adjusted pitch angle is set to a value below the second pitch angle. As indicated above this is done if the second output-power exceeds the first output-power.

If the first output-power exceeds the second output-power the adjusted pitch angle is varied in its value but in a reverse manner in view to the rise or fall of the value of the second pitch angle compared with the value of the first pitch angle.

The reverse variation is indicated by the value of the first pitch angle and by the value of the second pitch angle. If the second pitch angle exceeds the first pitch angle then the adjusted pitch angle will be set to a value below the first pitch angle. Accordingly if the first pitch angle exceeds the second pitch angle then the adjusted pitch angle is set to a value above the first pitch angle. As indicated above this is done if the first output-power exceeds the second output-power.

In a seventh step the output-power of the wind turbine, which is allocated to the adjusted pitch angle, is measured as adjusted output power.

In an eighth step the adjusted pitch angle is saved as second pitch angle.

In a ninth step the adjusted output power is saved as first output-power.

The steps three up to nine are repeated until an optimum pitch angle of the blades and therefore an optimized output-power of the wind turbine is found iteratively.

In a preferred configuration the steps of the method invented are not continued if the measured output-power reaches a predefined output-power (i.e. the rated output-power) of the wind turbine. For example a 2.5 MW wind turbine stops to perform the method-steps if the measured output-power reaches the value of 2500 kW.

In a preferred configuration the method-steps are not continued if there is no longer ice detected at the blades. The wind turbine returns to a "normal operation mode" with a predefined pitch angle setting.

In a preferred configuration the pitch angle of the blades is set in a so called positive direction. Thus the blade is turned in a way that the effective blade-surface, which is facing in the wind, is increased. Thus a stall-situation at the blades is prevented. As the stall-situation is avoided the power production is increased even if there is ice at the blades and in addition thrust on the blades is reduced.

The specific method to detect icing at the blades is not the main topic of the invention - for the principle of completeness reference is preferably made to these documents:
- the application PCT/EP 2010/058333, filed by the applicant at the WIPO, filing date 15.06.2010 (not published yet) and to
- the application EP 1 0179 463, filed by the applicant at the EPO, filing date 24.09.2010 (not published yet).

The method invented allows the adjustment of the settings of wind turbine parameters if ice changes the aerodynamic properties of the wind turbine blade. The settings are adjusted in view to an optimized power-generation of the wind turbine.

The method invented is adaptive in view to the amount of ice at the blades. The settings of the pitch angle are tracked over time, thus there is a continuous counteraction to the changing icing.

The method invented alleviates loads, which are acting on the blade - as stall situations are avoided even thrust acting on the blade is decreased.

The method invented exploits the benefit that the pitch angle function is a convex curve with only one global optimum point. With this chosen pitch angle the output power of the wind turbine is optimized in view to the exploitation of the incoming wind.

Thus in a preferred configuration the step size, which is used to vary the pitch angle, is changed in a linear manner or even in an erratic manner.

The invention is shown in more detail by help of figures. The figures show preferred configurations and do not limit the scope of the invention.
- FIG 1: shows a flow-chart according to the method invented,
- FIG 2: shows three charts of measured parameters of a wind turbine, where the method invented is applied,
- FIG 3: shows different possibilities to obtain optimized search algorithms, and
- FIG 4: shows three charts of measured parameters of a prior-art wind turbine as described in the introduction part.

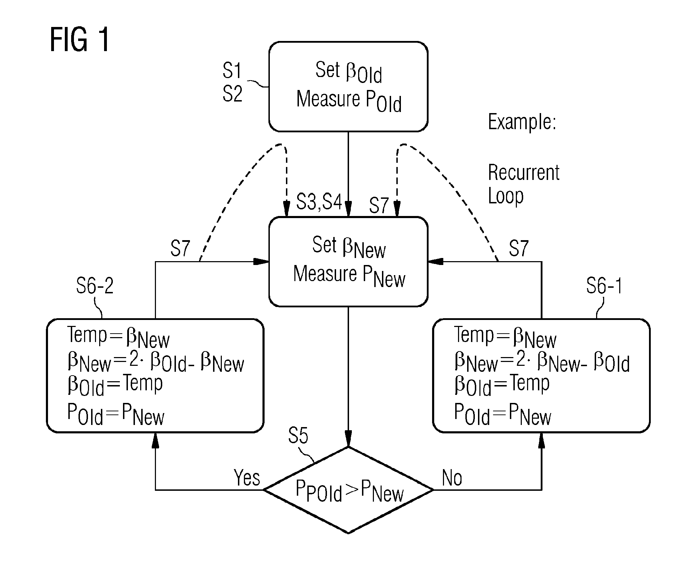

FIG 1 shows a flow chart according to the method invented.

The output power P of the wind turbine is a function P(ω,v,ß) and depends on the wind speed v, on the rotational speed ω of the turning rotor blades and on the pitch angle ß.

The function P(ß|ω,v) results in a convex curve, which shows one global optimum point - thus there is only one optimum pitch angle setting.

The output power P is optimized iteratively by a variation of the pitch angle ß.

A first option (not shown here) is to change the pitch angle ß in a manner with constant step-size while observing the allocated output power. If the output power increases or decreases the pitch angle is consequently varied in a discovered optimized direction. The procedure is repeated until an optimum pitch angle is achieved.
This iterative procedure is best mode if there are no disturbing influences to the output-power-function (i.e. changing wind speeds).

If the wind speeds changes the output-power function P(ω,v,ß) will be superposed with a kind of noise - interferences will be added to the basic-function of P(ω,v,ß).

This FIG 1 thus shows a preferred configuration for a basic-function of P(ω,v,ß) with superposed interferences.

Preferably the step size of the pitch angle is chosen in a way that the optimization-algorithm does not converge within small local maximum points, e.g. due to noise. The step size is variable and chosen in a way that the step size will be relatively large during first iterations but becomes smaller after several iterations. In this manner it will overcome noise and seek towards a global maximum point.

The method invented comprises a number of steps. In a first step S1 the pitch angle ß of the blades is set to a predetermined first pitch angle BOLD if ice is detected at the blades.

In a second step S2 the output-power POLD of the wind turbine is measured and is saved as first output-power POLD.

In a third step S3 the pitch angle BOLD of the blades is changed to a second pitch angle ßNEW.

In a fourth step S4 the output-power PNEW of the wind turbine is measured and is saved as second output-power PNEW.

In a fifth step S5 the first output-power POLD is compared with the second output-power PNEW.

If the second output-power PNEW exceeds the first output-power POLD (indicated with POLD < PNEW **→** NO) the pitch angle ß is varied again to result in an adjusted pitch angle ßNEW. This is shown in the square referred as step S6-1.

If the first output-power POLD exceeds the second output-power PNEW (indicated with POLD < PNEW → YES) the pitch angle ß is varied in a reverse manner to result in an adjusted pitch angle ßNEW. This is shown in the square referred as step S6-2.

In a next step S7 the output-power of the wind turbine, which is allocated to the adjusted pitch angle ßNEW, is measured as adjusted output power PNEW.

The steps S2 and the subsequent steps S3-S7 are repeated analogously until an optimum pitch angle ß of the blades and therefore an optimized output-power PNEW of the wind turbine is found iteratively.

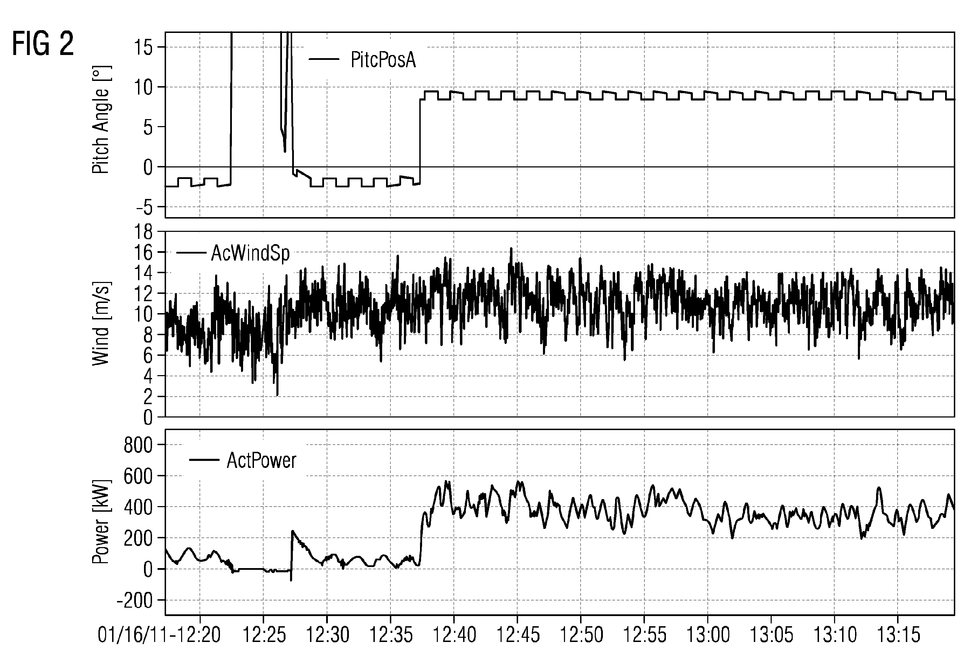

FIG 2 shows three charts of measured parameters of a wind turbine, where the method invented is applied.
The method invented improves the power production as shown here.

Ice is detected because an instant power production is much lower than expected - this is shown in the chart below.

When ice is detected the pitch angle is limited to minimum 10 degrees, which yields to an instantaneous improvement in production - this is shown in the chart above.

This provides evidence that the positive pitch change strategy will work well for optimization of the pitch angle and thereby power production.

The chosen value of 10 degrees in this situation will likely not be the optimal choice so the power production is further improved by the used adaptive approach.

The step frequency (time between pitch changes) may vary with e.g. the temperature. If it is very cold it may be necessary to pitch more frequently to stay in the optimum position - since the global maximum varies with the amount of ice (ice may build up faster when it is colder).
This of course depends on how fast the ice can build up compared to the minimum step frequency necessary for the algorithm to converge properly.
It may also depend on the operating point such as wind speed (being shown in the middle-chart), rotational speed, or power/torque.

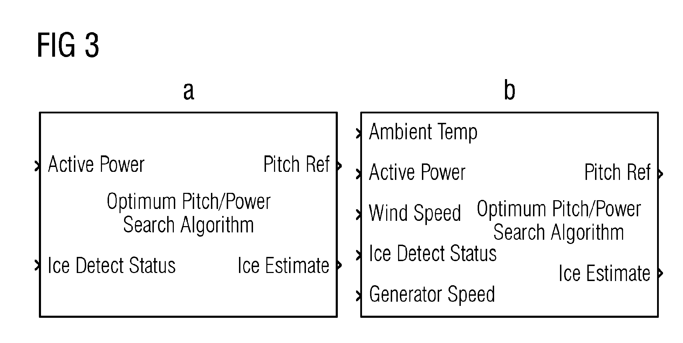

FIG 3 shows different possibilities to obtain and to realize optimized search algorithms - they can be simple or complex with a variety of input signals.

In block (a) a logic signal denotes when ice is detected - named "Ice Detect Status".

If "Ice Detect Status" is high, the pitch angle is modified iteratively in order to optimize the power output.
The difference between the pitch offset ßIce and a normal pitch angle ßNorm may be an expression for the amount of ice on the blades.

In block (b) the further use of ambient temperature, wind speed and rotational speed enhances the performance of the algorithm.

The ambient temperature may provide important knowledge about the external condition, whereas wind speed and rotational speed will provide further information regarding the current operating point of the wind turbine.

For instance, information regarding the rotational speed may be exploited to optimize the pitch angle settings during idling to increase the rotational speed and to start production when ice is present.

The ambient temperature can be used as indicator of how fast the step-frequency and the step-size of the pitch angle change should be chosen to maintain an optimum power output.

The wind speed can also indicate whether it is fair to compare the power output for two pitch settings, e.g. did the wind increase or decrease between the two pitch settings.

The adaptive algorithm can essentially use a great variety of inputs, e.g. the power, the rotational speed, the torque, the power coefficient (cp) which is aligned to the efficiency of the wind turbine, the load, etc.

Similar to pitch-power curve, the speed-power curve can be used with different parameter settings.

## Claims

1. Method to adjust the pitch angle of blades of a wind turbine,
- wherein a change of the aerodynamic performance of the blades is detected, while the blades show a first pitch angle at this point of time,
- wherein an output power is measured at the wind turbine and wherein the measured output power is allocated to the first pitch angle,
- wherein the pitch angle is varied with an adaptive step-size,
- wherein the value of the output power, which is allocated to each varied pitch angle, is measured,
- wherein the pitch angle variation is continued until an maximum output power value is obtained,
- while the adaptive step-size is chosen in dependency to the history of the measured output power values.

2. Method according to claim 1, wherein the change of the aerodynamic performance is caused by ice, which starts to cover or which already covers at least a part of the blades.

3. Method according to claim 1,
- wherein ice is detected, which covers at least parts of the blades,
- wherein the pitch angle of the blades is set to a predetermined first pitch angle if ice is detected at the blades in a first step,
- wherein the output-power of the wind turbine is measured and is saved as first output-power in a second step,
- wherein the pitch angle of the blades is changed to a second pitch angle in a third step,
- wherein the output-power of the wind turbine is measured and is saved as second output-power in a fourth step,
- wherein the first output-power is compared with the second output-power in a next step,
- wherein the second pitch angle of the blades is varied again to result in an adjusted pitch angle,
- while the adjusted pitch angle is varied in its value according to the rise or fall of the second pitch angle in view to the first pitch angle, if the second output-power exceeds the first output-power,
- while the adjusted pitch angle is varied in its value in a reverse manner to the rise or fall of the second pitch angle in view to the first pitch angle, if the first output-power exceeds the second output-power,
- wherein the output-power of the wind turbine, which is allocated to the adjusted pitch angle, is measured as adjusted output power,
- wherein the adjusted pitch angle is saved as second pitch angle,
- wherein the adjusted output power is saved as first output-power,
- wherein step three and the subsequent steps are repeated until the measured output power reaches a predetermined value.

4. Method according to claim 3, wherein the steps are not continued if ice is no longer detected at the blades.

5. Method according to claim 3 or claim 4, wherein the pitch angle of the blade is set in a way that the effective blade-surface, which is facing in the wind, is increased.

6. Method according to claim 1, wherein the output power of the wind turbine or wherein the output power of the generator of the wind turbine is measured and is allocated to each varied pitch angle.
